# EUROPÄISCHE PATENTSCHRIFT

(11) **EP 2 534 986 B1**
(45) Veröffentlichungstag und Bekanntmachung des Hinweises auf die Patenterteilung: **11.03.2015**
(21) Anmeldenummer: 12171356.4
(22) Anmeldetag: 08.06.2012
(51) Int. Cl.: A47J 31/44, A47J 31/46

(54) **Vorrichtung zum Erhitzen und Aufschäumen eines Getränkeprodukts**
Device for heating and foaming a beverage
Dispositif destiné à chauffer et faire mousser un produit de boisson

(30) Priorität: 17.06.2011 DE 102011077776
(43) Veröffentlichungstag der Anmeldung: 19.12.2012
(73) Patentinhaber: WMF AG, 73312 Geislingen/Steige (DE)
(72) Erfinder: Dollner, Sander, 89075 Ulm-Wilbingen (DE); Kiefer, Alexander, 73329 Kuchen (DE); Eicke, Joel, 89075 Ulm (DE); Bönsch, Thorsten, 73312 Geislingen/Steige (DE); Arndt, Peter, 89134 Blaustein (DE); Hostettler, Hans-Ulrich, 3114 Wichtrach (CH)
(74) Vertreter: Grünecker, Kinkeldey, Stockmair & Schwanhäusser

(56) Entgegenhaltungen:
- EP-A1- 2 036 471
- EP-A1- 2 359 725

## Beschreibung

Die Erfindung betrifft eine Vorrichtung zum Erhitzen und Aufschäumen eines Getränkeprodukts, beispielsweise Milch, insbesondere für die Zubereitung von Capuccino, Latte Macchiato oder ähnlichen Heißgetränken.

Eine Vorrichtung zum Aufschäumen von Milch ist beispielsweise aus der EP 1 501 398 bekannt. Bei der dort gezeigten Vorrichtung wird das offene Ende einer sogenannten Förderleitung in ein Milch enthaltendes Gefäß getaucht. Ein Dampferzeuger ist über eine erste Leitung und eine Druckluftquelle über eine zweite Leitung mit der Förderleitung verbunden. Beide Leitungen werden zusammengeführt und dann zu der Förderleitung geführt, so dass dann ein Dampf-/Luftgemisch über die Förderleitung in die Milch im Gefäß geleitet wird.

Eine Aufschäumvorrichtung zum Aufschäumen von Milch ist auch aus der DE 44 45 436 bekannt. Bei dieser Aufschäumvorrichtung wird Dampf über eine Dampfzuleitung von einem Dampferzeuger, Milch über eine Milchzuleitung und Luft über eine Luftzuleitung in eine Mischkammer geführt, dort gemischt und danach in eine Aufschäumkammer gedrückt, wo die Milch aufgeschäumt wird.

Andere Aufschäumvorrichtungen sind beispielsweise aus der DE 10 2009 025 986, EP 2 025 270, EP 1 747 743, WO 2004/089173 oder der nachveröffentlichten EP 2359 725 bekannt.

Die aus dem Stand der Technik bekannten Aufschäumvorrichtungen haben den Nachteil, dass das Einblasen von kalter Luft in die Dampfleitung bzw. in eine Mischkammer zu erhöhter Kondensation des Dampfes und somit zu einer Verschlechterung des Aufschäumvorgangs führt.

Der Erfindung liegt somit die Aufgabe zugrunde, eine Vorrichtung zum Erhitzen und Aufschäumen eines Getränkeprodukts bereitzustellen, die einen verbesserten Aufschäumvorgang aufweist und einen verbesserten Schaum liefert. Diese Aufgabe wird durch den Gegenstand des Anspruchs 1 gelöst.

Erfindungsgemäß wird eine Vorrichtung zum Erhitzen und Aufschäumen eines Getränkeprodukts bereitgestellt, umfassend:
einen Dampferzeuger,
eine Druckluftquelle,
eine Luftzuleitung, die mit der Druckluftquelle verbunden ist, zum Zuleiten von Luft von der Druckluftquelle zum Dampferzeuger,
eine Dampf-/Luftleitung, die mit dem Dampferzeuger verbunden ist, zum Zuleiten eines Dampf-/Luftgemisches vom Dampferzeuger in das Getränkeprodukt.

Dadurch, dass die Druckluft, anders als im Stand der Technik, von der Druckluftquelle in den Dampferzeuger geführt wird, wird bereits im Dampferzeuger ein erhitztes Dampf-/Luftgemisch bereitgestellt werden, was zu einer Reduzierung der Kondenswasserbildung in einer nachfolgenden Dampfleitung führt. Dies resultiert in einem verbesserten Aufschäumergebnis und einem besseren Schaum.

Die Vorrichtung weist an der Luftzuleitung ein Luftabsperrelement und/oder an der Dampf-/Luftleitung ein Dampfabsperrelement auf. Durch Öffnen und Schließen dieser Absperrelemente kann der Luftstrom bzw. der Strom des Dampf-/Luftgemisches gesteuert oder geregelt werden. Bei den Absperrelementen kann es sich insbesondere um Absperrventile handeln. Die Absperrelemente können ferngesteuert sein. Die Absperrelemente können elektromagnetisch, elektrisch, pneumatisch und/oder hydraulisch zu betätigen sein.

Bei dem Getränkeprodukt kann es sich um ein milchhaltiges Getränkeprodukt, insbesondere um Milch, handeln.

Die Luftzuleitung kann mit der Druckluftquelle insbesondere unmittelbar bzw. direkt verbunden sein. Sie kann mit dem Dampferzeuger (mittelbar oder unmittelbar) verbunden sein. Dabei kann jeweils insbesondere eine fluidische Verbindung vorgesehen sein. Bei der unmittelbaren Verbindung mündet die Leitung in die Druckluftquelle bzw. in den Dampferzeuger.

Der Dampferzeuger kann zum Verdampfen von Heißwasser ausgebildet sein und einen Heißwasserbereich sowie einen Dampfbereich aufweisen. Dabei kann die Luftzuleitung mit dem Dampfbereich und/oder dem Heißwasserbereich verbunden sein. Die Luftzuleitung kann insbesondere in den Dampfbereich und/oder Heißwasserbereich münden. Die Luftzuleitung kann auch mit einer Heißwasserentnahmeöffnung oder einer Heißwasserentnahmeleitung des Dampferzeugers verbunden sein oder in diese münden. Derartige Heißwasserentnahmeöffnungen bzw. -leitungen werden beispielsweise dazu verwendet, Heißwasser für Reinigungsvorgänge und/oder für die Zubereitung von Tee oder anderen Heißwassergetränken zu entnehmen. Die genannten Varianten führen zu einer sehr feinen Durchmischung von Luft und Dampf.

Der Dampferzeuger kann insbesondere ein Dampfkessel sein.

Die beschriebenen Vorrichtungen (Aufschäumvorrichtungen) können eine Wasserleitung umfassen, die mit dem Wasserdampferzeuger verbunden ist, zum Zuleiten von Wasser zum Dampferzeuger, wobei die Luftzuleitung in die Wasserleitung mündet. Durch die Zuführung der Luft in das Wasser, aus dem anschließend der Dampf erzeugt wird, und dies noch vor dem Dampferzeuger, wird der nachteilige Einfluss von Druckschwankungen bei der Druckluftzufuhr, beispielsweise aufgrund der Luftpumpe, verringert.

Die Wasserleitung kann eine Kaltwasserzuleitung zum Zuleiten von Kaltwasser sein. Diese Kaltwasserzuleitung kann insbesondere direkt bzw. unmittelbar mit dem Dampferzeuger verbunden sein; auf diese Weise würde dann die Luft gemeinsam mit dem Kaltwasser dem Dampferzeuger zugeführt werden. Alternativ kann diese Kaltwasserzuleitung auch in einen Boiler bzw. Heißwasserbereiter münden, aus dem dann Heißwasser über eine Heißwasserleitung dem Dampferzeuger zugeführt wird. Falls die Druckluft einer derartigen Kaltwasserleitung zugeführt wird, würde sie dann über den Boiler zu dem Dampferzeuger gelangen. Bei der genannten Wasserleitung kann es sich alternativ auch um eine Heißwasserzuleitung zum Zuführen von Heißwasser handeln; diese kann beispielsweise von einem Boiler zum Dampferzeuger führen. In diesem Fall ist es auch möglich, dass die Luftzuleitung in die Heißwasserzuleitung mündet.

Die Wasserleitung kann mit einer Wasserquelle (unmittelbar oder mittelbar) verbunden sein. Die Wasserquelle kann ein Wasseranschluss, beispielsweise über einen Wasserhahn, oder ein Wasserreservoir, beispielsweise in Form eines Wasserbehälters, sein. Die Wasserquelle kann eine Kaltwasserquelle und/oder eine Warmwasserquelle sein.

Die beschriebenen Vorrichtungen können eine Aufschäumkammer zum Aufschäumen des Getränkeprodukts, insbesondere von Milch, umfassen, wobei die Dampf-/Luftleitung mit der Aufschäumkammer verbunden ist. Die Dampf-/Luftleitung kann unmittelbar oder mittelbar mit der Aufschäumkammer verbunden sein; sie kann insbesondere in die Aufschäumkammer münden. In einer derartigen Aufschäumkammer werden Dampf, Luft und Getränkeprodukt besonders gut vermischt und emulgiert, was zu einer besonders guten Schaumkonsistenz führt.

Die Vorrichtung kann eine Getränkeproduktzuleitung umfassen, die mit der Aufschäumkammer verbunden ist, zum Zuleiten des Getränkeprodukts zur Aufschäumkammer. Die Getränkeproduktzuleitung kann unmittelbar oder mittelbar mit der Aufschäumkammer verbunden sein. Im Falle von Milch würde es sich also um eine Milchzuleitung handeln.

Die zuvor beschriebenen Vorrichtungen können eine Getränkeproduktfördereinrichtung umfassen. Die Getränkeproduktfördereinrichtung kann insbesondere zum Fördern von Milch, insbesondere kalter Milch ausgebildet sein. Die Getränkeproduktfördereinrichtung kann zum Fördern des Getränkeprodukts in die Aufschäumkammer ausgebildet sein. Alternativ oder zusätzlich kann die Getränkeproduktfördereinrichtung zum Fördern eines erhitzten Getränkeprodukts und/oder eines Getränkeproduktschaums ausgebildet sein. Die Getränkeproduktfördereinrichtung kann zum Fördern eines Getränkeprodukts aus dem gleichen Gefäß, in das der Schaum und/oder das erhitzte Getränkeprodukt ausgegeben werden, ausgebildet sein. Alternativ kann die Getränkeproduktfördereinrichtung zum Fördern eines Getränkeprodukts aus einem anderen Gefäß, als das in das der Getränkeproduktschaum und/oder das erhitzte Getränkeprodukt ausgegeben werden, ausgebildet sein.

Die oben genannte Getränkeproduktzuleitung kann mit der Getränkeproduktfördereinrichtung verbunden sein, insbesondere in diese münden.

Die Getränkeproduktfördereinrichtung kann insbesondere eine Venturi-Kammer zum Ansaugen des Getränkeprodukts umfassen. Auf diese Weise kann ein kaltes Getränkeprodukt, ein warmes Getränkeprodukt oder Getränkeproduktschaum mittels des Venturi-Effektes angesaugt und damit gefördert werden. Die Venturi-Kammer kann insbesondere mit der Dampf-/Luftleitung (mittelbar oder unmittelbar) verbunden sein. Durch den Dampf-/Luftstrom lässt sich der Unterdruck für den Venturi-Effekt erzeugen. Alternativ kann die Getränkeproduktfördereinrichtung eine Pumpe umfassen.

Die zuvor beschriebenen Vorrichtungen können weiterhin eine Zuführeinrichtung mit einem offenen Ende umfassen. Das offene Ende kann in ein Gefäß getaucht werden. Das offene Ende kann insbesondere in ein ein Getränkeprodukt enthaltendes Gefäß getaucht werden. Die Zuführeinrichtung kann ausgebildet sein, um dem Gefäß ein Dampf-/Luftgemisch, ein erhitztes Getränkeprodukt und/oder Getränkeproduktschaum zuzuführen. Durch das Zuführen eines Dampf-/Luftgemisches kann ein Getränkeprodukt in dem Gefäß aufgeschäumt werden. Im Falle der Zuführung eines erhitzten Getränkeprodukts und/oder Getränkeproduktschaums kann die Zuführeinrichtung beispielsweise mit einer Aufschäumkammer, insbesondere deren Auslass, (mittelbar oder unmittelbar) verbunden sein, um den in der Aufschäumkammer erzeugten Schaum und/oder das erhitzte Getränkeprodukt dem Gefäß zuzuführen.

Die Zuführeinrichtung kann derart mit der Dampf-/Luftleitung verbunden sein, dass aus dem offenen Ende ein Dampf-/Luftgemisch, ein heißes Getränkeprodukt und/oder Getränkeproduktschaum ausgegeben werden. Zur Ausgabe eines Dampf-/Luftgemisches kann die Zuführeinrichtung vorzugsweise direkt bzw. unmittelbar mit der Dampf-/Luftleitung verbunden sein.

Die Aufschäumkammer kann eine Schaumauslassöffnung oder eine Schaumauslassleitung zum Ausgeben von Getränkeproduktschaum, insbesondere Milchschaum, in ein Gefäß umfassen. Die Getränkeproduktzuleitung und/oder die Getränkeproduktfördereinrichtung können zum Leiten bzw. Fördern von Getränkeprodukt oder Getränkeproduktschaum aus dem Gefäß in die Aufschäumkammer ausgebildet sein. Durch ein erneutes oder wiederholtes Aufschäumen von bereits ausgegebenem Getränkeprodukt oder bereits ausgegebenem Getränkeproduktschaum kann eine verbesserte Schaumkonsistenz erreicht werden.

Die Zuführeinrichtung kann eine Einlassöffnung zur Aufnahme eines Getränkeprodukts aufweisen. Dabei kann die Zuführeinrichtung insbesondere eine Einlassöffnung zur Aufnahme eines Getränkeprodukts aus dem Gefäß aufweisen. Die Zuführeinrichtung kann eine Getränkeproduktzuleitung, beispielsweise wie oben beschrieben, umfassen. Alternativ oder zusätzlich kann in die Einlassöffnung eine bzw. die Getränkeproduktzuleitung münden. Die Zuführeinrichtung kann eine Aufschäumkammer und/oder eine Getränkeproduktfördereinrichtung zum Fördern eines Getränkeprodukts umfassen. Falls die Zuführeinrichtung eine Aufschäumkammer umfasst, würde das Getränkeprodukt in der Zuführeinrichtung aufgeschäumt werden. Eine derart vorgesehene Aufschäumkammer kann, wie bereits oben beschrieben, mit einer Getränkeproduktzuleitung und/oder einer Getränkeproduktfördereinrichtung verbunden sein. Beispielsweise kann die Zuführeinrichtung eine Getränkeprodukteinlassöffnung aufweisen, die über eine Getränkeproduktzuleitung mit der Aufschäumkammer verbunden ist. Dabei können die Getränkeprodukteinlassöffnung und/oder die Aufschäumkammer derart an bzw. in der Zuführeinrichtung angeordnet sein, dass sie in das im Gefäß enthaltene Getränkeprodukt getaucht werden können.

Die in oder an der Zuführeinrichtung vorgesehene Getränkeproduktfördereinrichtung kann insbesondere eine Venturi-Kammer zum Ansaugen des Getränkeprodukts umfassen.

Die zuvor beschriebenen Vorrichtungen können eine Temperaturerfassungseinrichtung zum Erfassen der Temperatur des erhitzten Getränkeprodukts und/oder des Getränkeproduktschaums umfassen. Die Temperaturerfassungseinrichtung kann einen Temperatursensor umfassen, der mit der Getränkeproduktzuleitung, dem offenen Ende der Zuführeinrichtung, der Einlassöffnung der Zuführeinrichtung, der Getränkeproduktfördereinrichtung und/oder der Aufschäumkammer verbunden und/oder daran angeordnet ist, insbesondere je nachdem, welches dieser Elemente vorhanden ist. Damit kann also beispielsweise die Getränkeprodukttemperatur an oder in der Getränkeproduktzuleitung, am oder im offenen Ende der Zuführeinrichtung, an oder in der Einlassöffnung der Zuführeinrichtung, in der Getränkeproduktfördereinrichtung bzw. in der Aufschäumkammer erfasst werden. Der Temperatursensor kann zum Erfassen der (Getränkeprodukt- und/oder Schaum-) Temperatur in der Getränkeproduktzuleitung, der Aufschäumkammer, der Getränkeproduktfördereinrichtung und/oder dem Gefäß ausgebildet sein. Bei dem Gefäß kann es sich insbesondere um das, beispielsweise ein Getränkeprodukt enthaltendes, Gefäß handeln, in das das offene Ende der Zuführeinrichtung getaucht ist.

Die Temperaturerfassungseinrichtung kann auch mehrere Temperatursensoren umfassen, die jeweils an einer der zuvor genannten Einrichtungen oder Elemente angeordnet sind.

Die zuvor beschriebenen Vorrichtungen können eine Steuerungseinrichtung zur automatisierten Steuerung und/oder Regeln des Dampferzeugers, der Druckluftquelle, des Luftabsperrelements, des Dampfabsperrelements und/oder der Getränkeproduktfördereinrichtung umfassen. Falls also beispielsweise ein fernsteuerbares Luftabsperrelement und/oder Dampfabsperrelement vorgesehen sind, können diese Elemente über die Steuerungseinrichtung ferngesteuert werden. Die Steuerungseinrichtung kann mit der Temperaturerfassungseinrichtung, insbesondere einem oder mehreren Temperatursensoren der Temperaturerfassungseinrichtung, verbunden sein und zum Steuern und/oder Regeln in Abhängigkeit der erfassten Temperatur ausgebildet sein.

Die Steuerungseinrichtung kann derart ausgebildet sein, dass eine gewünschte Getränkeprodukttemperatur, Schaumtemperatur und/oder Schaumkonsistenz vorgebbar ist und das Steuern und/oder Regeln in Abhängigkeit der vorgegebenen Getränkeprodukttemperatur, Schaumtemperatur und/oder Schaumkonsistenz erfolgt. Insbesondere kann für eine Mehrzahl von vorgebbaren Getränkeprodukttemperaturen, Schaumtemperaturen und/oder Schaumkonsistenzen eine bestimmte Steuerung des Dampferzeugers, der Druckluftquelle, des Luftabsperrelements, des Dampfabsperrelements und/oder der Getränkeproduktfördereinrichtung in der Steuereinrichtung einprogrammiert sein. Auf diese Weise kann beispielsweise ein Benutzer eine gewünschte Schaumtemperatur und/oder Schaumkonsistenz eingeben, woraufhin eine entsprechende automatisierte Steuerung der erforderlichen Einrichtungen und/oder Elemente erfolgt.

Bei den zuvor beschriebenen Vorrichtungen können das Luftabsperrelement und/oder das Dampfabsperrelement getrennt voneinander durch die Steuereinrichtung ansteuerbar sein. Damit lässt sich Schaum mit einer Vielzahl verschiedener Temperaturen und verschiedener Schaumkonsistenzen erzeugen.

Die zuvor beschriebenen Vorrichtungen können einen Kaltgetränkeproduktbehälter, insbesondere einen Kaltmilchbehälter, und eine Kühleinrichtung für den Kaltgetränkeproduktbehälter umfassen.

Die beschriebenen Vorrichtungen können einen Drucksensor zum Erfassen des Drucks im Dampferzeuger und/oder einen Temperatursensor zum Erfassen der Temperatur im Dampferzeuger umfassen, wobei die Steuerung der Druckluftquelle und/oder des Luftabsperrelements in Abhängigkeit des erfassten Drucks und/oder der erfassten Temperatur erfolgt. Auf diese Weise kann die Druckluftzufuhr auf die Verhältnisse im Dampferzeuger angepasst werden, was zu einer stabilen und gleichmäßigen Dampferzeugung führt.

Die Erfindung stellt weiterhin eine Kaffeemaschine, umfassend eine der zuvor beschriebenen Vorrichtungen zum Erhitzen und Aufschäumen eines Getränkeprodukts, insbesondere von Milch, bereit.

Ausführungsbeispiele der Erfindung werden nachfolgende anhand der Zeichnungen näher erläutert. Es zeigen:
- Fig. 1: schematisch eine Darstellung eines ersten Ausführungsbeispiels einer Vorrichtung zum Erhitzen und Aufschäumen von Milch;
- Fig. 2: schematisch eine Querschnittsansicht des unteren Teils einer Zuführeinrichtung;
- Fig. 3: schematisch eine Darstellung eines zweiten Ausführungsbeispiels einer Vorrichtung zum Erhitzen und Aufschäumen von Milch;
- Fig. 4: schematisch eine Darstellung eines weiteren Ausführungsbeispiels einer Vorrichtung zum Erhitzen und Aufschäumen von Milch;
- Fig. 5: schematisch ein weiteres Ausführungsbeispiel einer Vorrichtung zum Erhitzen und Aufschäumen von Milch;
- Fig. 6: schematisch ein weiteres Ausführungsbeispiel einer Vorrichtung zum Erhitzen und Aufschäumen von Milch.

Die Figuren zeigen mehrere Ausführungsbeispiele, wobei die verschiedenen in den Figuren gezeigten und/oder nachfolgend beschriebenen Aspekte auch in anderen Kombinationen möglich sind.

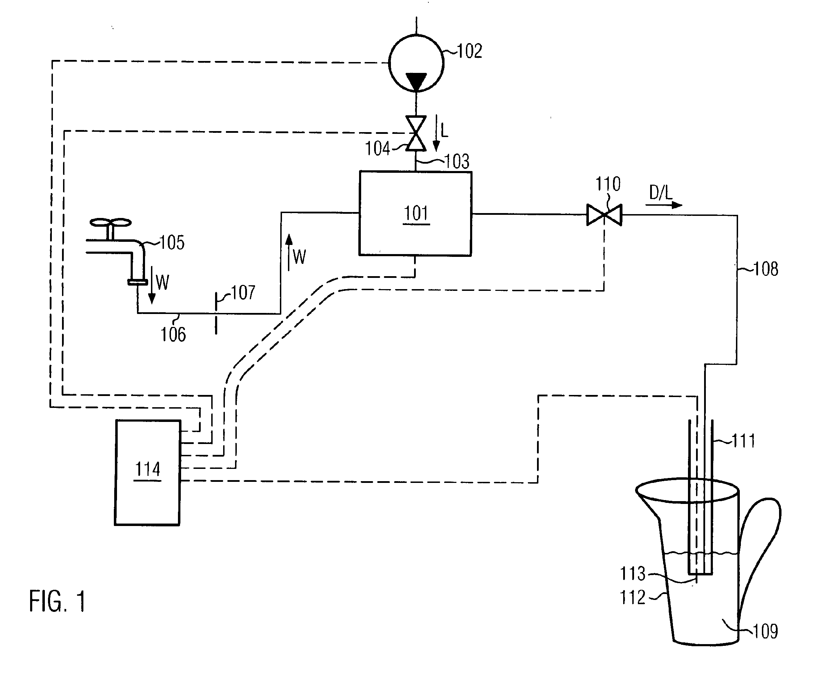

Das in Fig. 1 schematisch gezeigte Ausführungsbeispiel einer Vorrichtung zum Erhitzen und Aufschäumen von Milch umfasst einen Dampferzeuger 101. Der Dampferzeuger kann beispielsweise ein Dampfkessel sein, in dem Wasser verdampft wird. In diesem und den nachfolgenden Beispielen handelt es sich bei dem aufzuschäumenden Getränkeprodukt um Milch, wobei andere Getränkeprodukte ebenfalls möglich sind.

Die Aufschäumvorrichtung umfasst weiterhin eine Druckluftquelle 102. Die Druckluftquelle kann beispielsweise eine Druckluftpumpe oder eine Druckgaspatrone sein. Von der Druckluftquelle 102 führt eine Luftzuleitung 103 zum Dampferzeuger, um Druckluft von der Druckluftquelle in den Dampferzeuger zu leiten. Entlang der Luftzuleitung 103 ist in diesem Beispiel ein Absperrelement in Form eines Ventils 104 vorgesehen, über das die Luftzufuhr zum Dampferzeuger geregelt werden kann. Das Absperrelement kann insbesondere geschlossen werden, um die Luftzufuhr zu unterbrechen. Das Ventil kann beispielsweise ein Magnetventil oder ein Rückschlagventil sein.

Der Dampferzeuger 101 wird von einer Wasserquelle 105 gespeist, die im gezeigten Beispiel in Form eines Wasserhahns vorgesehen ist. Die Wasserquelle 105 ist über eine Wasserleitung 106 mit dem Dampferzeuger unmittelbar verbunden. Entlang der Wasserleitung 106 kann eine Blende oder ein Druckminderer 107 vorgesehen sein, um den Wasserdruck geeignet einzustellen. Zur Steuerung und/oder Regelung des Wasserflusses kann auch ein Ventil entlang der Wasserleitung vorgesehen sein.

Statt eines Anschließens der Wasserleitung an das verfügbare Wassernetz über einen Wasserhahn 105 kann auch ein Wasserreservoir, z.B. in Form eines Wasserbehälters, beispielsweise der Kaffeemaschine, vorgesehen sein, aus dem dann das Wasser mittels einer entsprechenden Fördereinrichtung in den Dampferzeuger gefördert wird. Die Wasserförderung aus dem Behälter in den Dampferzeuger kann in diesem Fall mittels Gravitationskraft oder mittels einer aktiven Förderung, beispielsweise mit einer Pumpe, erfolgen.

In dem gezeigten Beispiel wird der Dampferzeuger 101 mit Kaltwasser gespeist, das dann im Dampferzeuger erhitzt und verdampft wird. Alternativ kann dem Dampferzeuger auch ein Heißwasserbereiter bzw. Boiler vorgeschaltet sein, der dann also zwischen Wasserquelle 105 und Dampferzeuger 101 geschaltet wäre. In diesem Fall würde der Heißwasserbereiter aus einer Kaltwasserquelle über eine Kaltwasserzuleitung mit Kaltwasser gespeist werden. Im Heißwasserbereiter würde das Kaltwasser erhitzt und als Heißwasser über eine Heißwasserzuleitung dem Dampferzeuger zugeführt werden, wo dann das Verdampfen erfolgt.

Dadurch, dass die Druckluft in den Dampferzeuger geführt wird (beispielsweise in dessen Heißwasser- oder Dampfbereich) und nicht erst in eine vom Dampferzeuger abgehende Dampfleitung (oder in eine dem Dampferzeuger nachgeschaltete Mischkammer zum Mischen von Luft und Dampf) geblasen wird, wird bereits im Dampferzeuger ein homogenes Dampf-/Luftgemisch erzeugt. Dieses Dampf-/Luftgemisch wird über eine Dampf-/Luftleitung 108 vom Dampferzeuger weg und der aufzuschäumenden Milch 109 zugeführt. Entlang der Dampf-/Luftleitung kann ein Absperrventil 110 vorgesehen sein, um den Strom des Dampf-/Luftgemischs zu steuern und/oder zu regeln.

Die Dampf-/Luftleitung 108 ist hier unmittelbar mit einer Zuführeinrichtung 111 verbunden. Die Zuführeinrichtung weist ein offenes Ende auf (an ihrem unteren Ende), das in ein Milch 109 enthaltendes Gefäß 112 getaucht werden kann. Die Zuführeinrichtung kann beispielsweise in Form eines Rohrs ausgebildet sein, in dem ein Dampf-/Luftkanal verläuft, der in das offene Ende und damit in die Milch mündet. Die Luftzuleitung 108 ist dann (fluidisch) mit dem Dampf-/Luftkanal der Zuführeinrichtung 111 verbunden. Auf diese Weise kann im hier gezeigten Beispiel das Dampf-/Luftgemisch über das offene Ende in die im Gefäß 112 befindliche Milch 109 ausgegeben werden, so dass dann im Gefäß ein Erhitzen und Aufschäumen der Milch erfolgt.

Obwohl herkömmliche Luftpumpen aufgrund ihrer bauartbedingten Pulsation die Luft diskontinuierlich, also mehr oder weniger stoßweise, zur Verfügung stellen, kann wegen der Bereitstellung der Luft bereits im Dampferzeuger trotzdem eine homogene Mischung von Luft und Dampf gewährleistet werden, was zu einem homogenen Schaum führt.

In dem gezeigten Beispiel ist weiterhin eine Temperaturerfassungseinrichtung vorgesehen, die hier einen Temperatursensor 113 umfasst, der mit der Zuführeinrichtung im Bereich des offenen Endes, also im unteren Bereich der Zuführeinrichtung 111 mit dieser verbunden und an dieser angeordnet ist. Mit dem Temperatursensor 113 kann die Temperatur der im Gefäß 112 befindlichen Milch 109 (und im Laufe des Betriebs auch des Milchschaums) erfasst oder gemessen werden. Wenn die Zuführeinrichtung 111 beispielsweise in Form eines Rohrs ausgebildet ist, kann der Temperatursensor ebenfalls teilweise im Rohr befindlich angeordnet sein, wobei zumindest ein Teil des Temperatursensors, beispielsweise die Spitze, aus der Zuführeinrichtung herausragt.

Die gezeigte Aufschäumvorrichtung umfasst weiterhin eine Steuerungseinrichtung 114 zum automatisierten Steuern und/oder Regeln verschiedener Teile oder der gesamten Aufschäumvorrichtung. Die Steuerungseinrichtung ist in dem gezeigten Beispiel insbesondere mit dem Dampferzeuger 101, der Druckluftquelle 102, den Ventilen 104 und 110 sowie dem Temperatursensor 113 verbunden. Die Steuerungseinrichtung 114 kann weiterhin auch mit der Wasserquelle 105 oder einem entlang der Wasserleitung 106 angeordneten Ventil verbunden sein.

Mittels der Steuerungseinrichtung 114 kann das Druckluftventil 104 und/oder das Dampf-/Luftventil 110 ferngesteuert und je nach Bedarf geöffnet oder geschlossen werden. Grundsätzlich kann es bei der Aufschäumvorrichtung für einen Benutzer möglich sein, eine gewünschte Milch- oder Schaumtemperatur einzugeben. In gleicher Weise kann eine gewünschte Schaumkonsistenz eingegeben werden; dabei kann es beispielsweise verschiedene, vom Benutzer wählbare Festigkeitsgrade für den Schaum geben. Alternativ ist es auch möglich, dass die Aufschäumvorrichtung bzw. die Steuerungseinrichtung für eine fest vorgegebene Schaumtemperatur und/oder eine fest vorgegebene Schaumkonsistenz eingerichtet und programmiert sind. Für eine fest vorgegebene oder eine vom Benutzer gewählte Schaumkonsistenz kann in der Steuerungseinrichtung 114 einprogrammiert sein, welche Menge an Luft und/oder wie viel Dampf erforderlich ist. Während des Aufschäumvorgangs würde dann die Druckluftquelle 102 und/oder das Ventil 104 derart angesteuert werden, dass die für die Schaumkonsistenz erforderliche Druckluftmenge zur Verfügung gestellt wird. Der Dampferzeuger 101 und/oder das Ventil 110 können mittels der Steuerungseinrichtung 114 basierend auf den vom Temperatursensor 113 gelieferten Informationen gesteuert werden. So kann beispielsweise das Ventil 110 bei einer vorherbestimmten Temperatur unterhalb der vom Benutzer gewünschten Schaumtemperatur geschlossen werden. Das Ventil 110 kann auch genau dann geschlossen werden, wenn der Temperatursensor 113 die gewünschte Schaumtemperatur misst.

Für die Steuerung der Ventile 104 und 110 sowie des Dampferzeugers 101 selbst (insbesondere eines im Dampferzeuger enthaltenen Heizelements) kann im Dampferzeuger 101 ebenfalls ein Temperatursensor und/oder Drucksensor vorgesehen sein. Aus dem Druck bzw. aufgrund der Temperatur im Dampferzeuger kann mittels des Daltonschen Gesetzes (Gesetz der Partialdrücke) der Teildruck der eingebrachten Druckluft ermittelt werden. Darauf basierend kann die Steuerungseinrichtung 114 ein Öffnen oder Schließen des Ventils 104 veranlassen, um die beispielsweise für eine gewünschte Schaumkonsistenz erforderliche Luftmenge bereitzustellen.

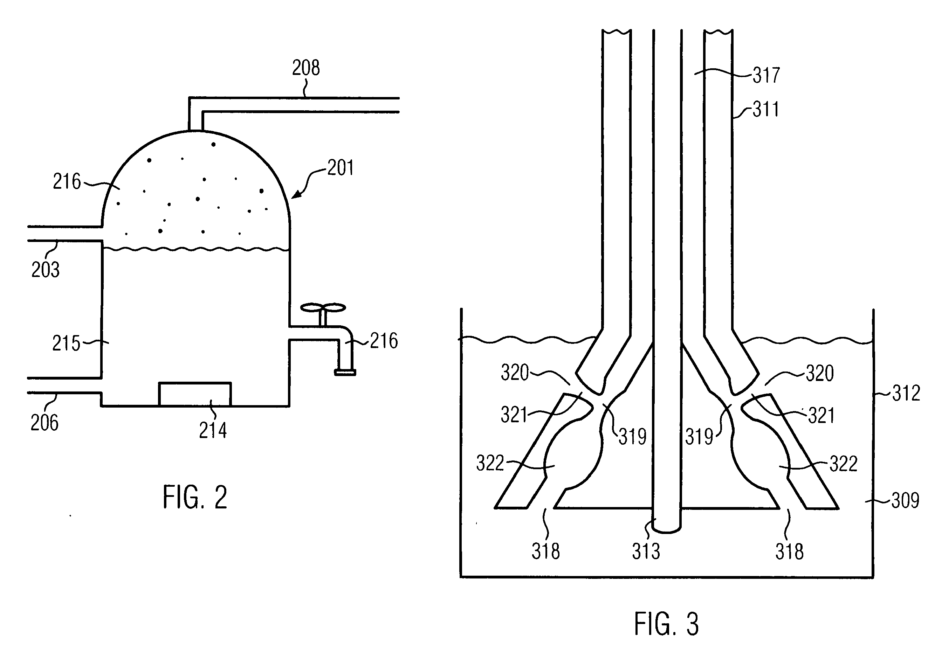

Fig. 2 illustriert schematisch ein Beispiel eines Dampferzeugers 201 in Form eines Dampfkessels. Bei dem gezeigten Dampferzeuger handelt es sich um einen Heißwasserbereiter. In dem Dampferzeuger 201 ist ein Heizelement 214 vorgesehen, mit dem das zugeführte Wasser erhitzt und verdampft wird. Die Einspeisung des Wassers erfolgt über eine Wasserleitung 206. Bei dieser kann es sich um eine Kaltwasser- oder eine Heißwasserzuleitung handeln. Das mit dem Heizelement 214 für die Verdampfung erhitzte Wasser befindet sich in einem unteren Bereich des Dampfkessels, dem sogenannten Heißwasserbereich 215. Über der Flüssigkeit bildet sich Wasserdampf 216, der sich somit im Dampfbereich des Dampferzeugers befindet.

Über eine Luftzuleitung 203 wird in dem gezeigten Beispiel Druckluft in den Dampfbereich des Dampferzeugers, also in den Dampf, geleitet. Damit wird die Luft mit dem Dampf im Dampfbereich fein durchmischt und gleichmäßig verteilt. Aufgrund des heißen Dampfs findet dabei auch eine Entkeimung der eingebrachten Luft statt. Das Dampf-/Luftgemisch wird dann über eine Dampf-/Luftleitung 218 vom Dampferzeuger weg in Richtung der Milch, beispielsweise zu einer Zuführeinrichtung geführt.

In dem gezeigten Beispiel mündet die Luftzuleitung direkt in den Dampferzeuger in dessen Dampfbereich. Alternativ kann die Luftzuleitung auch an einer anderen Stelle in den Dampferzeuger münden. Beispielsweise kann die Luftzuleitung in den Heißwasserbereich 215 münden. Gemäß einem anderen Beispiel ist am Dampferzeuger eine Heißwasserentnahmeleitung 216 vorgesehen. Das entnommene Heißwasser kann beispielsweise zu Reinigungszwecken oder für die Zubereitung von anderen Heißgetränken, wie beispielsweise Tee, verwendet werden. Die Luftzuleitung kann in einem solchen Fall auch mit der Heißwasserentnahmeleitung 216 verbunden sein, beispielsweise in diese münden. Die Luftzuleitung kann in die Heißwasserentnahmeöffnung münden.

Bei dem Einbringen der im Vergleich mit dem Heißwasser bzw. dem heißen Dampf gewöhnlich kälteren Luft wird auch im Vergleich zu einem Einblasen der Druckluft in eine vom Dampferzeuger weggehende Dampfleitung die Ausdehnung der Luft durch die Erwärmung durch das verhältnismäßig große Puffervolumen im Dampferzeuger kompensiert. Der Druck der zugeführten Luft kann weiterhin besser auf den Wasser- oder Dampferzeuger abgestimmt werden, da der Druck im Dampferzeuger aufgrund des größeren Volumens stabiler ist als in einer Dampfleitung.

Für die Zuführeinrichtung, wie sie beispielsweise auch in Fig. 1 gezeigt ist, gibt es eine Vielzahl möglicher Ausführungsformen. Ein Beispiel ist schematisch in Fig. 3 illustriert. Die in Querschnittsansicht gezeigte Zuführeinrichtung 311 ist in Form eines Rohrs ausgebildet, in dem ein Dampf-/Luftkanal 317 verläuft. Dieser Dampf-/Luftkanal 317 kann beispielsweise unmittelbar mit einer Dampf-/Luftleitung, die vom Dampferzeuger kommt, (fluidisch) verbunden sein. Die Zuführeinrichtung 311 weist in dem gezeigten Beispiel zwei offene Enden 318 auf, die in ein Milch 309 enthaltendes Gefäß 312 getaucht sind. Weiterhin ist ein Temperatursensor 313 vorgesehen, der entlang der Achse der Zuführeinrichtung 311 angeordnet und um den herum der Dampf-/Luftkanal vorgesehen ist.

In dem gezeigten Beispiel umfasst die Zuführeinrichtung zwei Venturi-Kammern 319 sowie zwei damit verbundene Aufschäumkammern 322. Die Venturi-Kammern 319 sind einerseits mit dem Dampf-/Luftkanal 317 und andererseits den jeweiligen Aufschäumkammern verbunden. Durch den Dampf-/Luftstrom wird in jeder Venturi-Kammer 319 ein Unterdruck erzeugt, so dass mittels des Venturi-Effekts über die Einlassöffnungen 320 und Milchzuleitungen 321 die Milch 309 in die entsprechende Aufschäumkammer 322 gesaugt wird, wo sie aufgeschäumt und über das offene Ende 318 wiederum in das Gefäß 312 ausgegeben wird. Da die aufgeschäumte Milch in das gleiche Gefäß abgegeben wird, aus dem sie eingesaugt worden ist, wird die Milch unter Umständen mehrfach einem Aufschäumvorgang in der Venturi-Kammer unterzogen, was zu einer noch besseren Schaumkonsistenz führt.

Als Alternative ist es auch möglich, keine Venturi-Kammer, aber trotzdem die Milchzuleitungen 321 vorzusehen. Die Milch würde dann auch ohne aktive Förderung in die Aufschäumkammern fließen, wo eine Aufschäumung im Innern der Zuführeinrichtung erfolgt.

Statt dem Vorsehen einer Aufschäumkammer kann alternativ der Dampf-/Luftkanal 317 auch unmittelbar in das offene Ende 318 der Zuführeinrichtung 311 münden, so dass das Dampf-/Luftgemisch aus der Zuführeinrichtung 311 unmittelbar in die im Gefäß 312 vorhandene Milch 309 ausgegeben wird und die Aufschäumung dann im Gefäß und nicht in einer in der Zuführeinrichtung 311 vorhandenen Aufschäumkammer stattfindet.

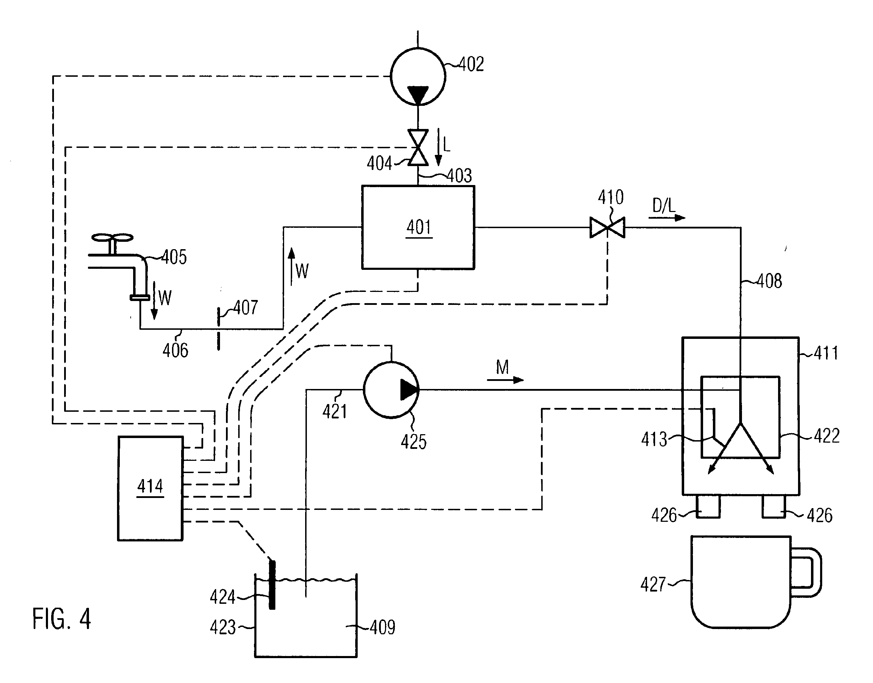

In Fig. 4 ist schematisch eine andere Ausführungsform einer Aufschäumvorrichtung gezeigt. Auch die in diesem Beispiel illustrierte Aufschäumvorrichtung umfasst einen Dampferzeuger 401 und eine Druckluftquelle 402, wobei die Druckluft über eine Luftzuleitung 403 dem Dampferzeuger zugeführt wird. Entlang der Luftzuleitung 403 ist ein Ventil 404 vorgesehen. Die Luftzuleitung 403 führt in den Dampferzeuger 401, wobei die Mündung der Luftzuleitung 403, wie bereits im Zusammenhang mit Fig. 2 beschrieben, an verschiedenen Stellen des Dampferzeugers angeordnet sein kann, beispielsweise im Dampfbereich oder im Heißwasserbereich. Von einer Kaltwasserquelle 405 wird über eine Wasserleitung 406, an der ein Druckminderer 407 angeordnet ist, das Kaltwasser in den Dampferzeuger geleitet. Auch bei diesem Ausführungsbeispiel kann, wie bereits zuvor beschrieben, statt des Wasserhahns ein Wasserbehälter vorgesehen und/oder ein Heißwasserbereich vor den Dampferzeuger 401 geschaltet sein.

Vom Dampferzeuger 401 führt eine Dampf-/Luftleitung 408, an der ein Absperrventil 410 angeordnet ist, zu einer Aufschäumkammer 422 in einer Zuführeinrichtung 411, wo ein Aufschäumen der Milch stattfindet.

In dem hier gezeigten Beispiel wird die Milch 409 in einem Kaltmilchbehälter 423 bereitgestellt. Dieser Kaltmilchbehälter 423 kann beispielsweise in einer Kühleinrichtung, beispielsweise einem Kühlschrank, angeordnet sein. Zur Überwachung der Milchtemperatur ist ein Temperatursensor 424 vorgesehen, der mit der Steuerungseinrichtung 414 verbunden ist. Grundsätzlich kann auch in diesem Beispiel die Steuerungseinrichtung 414 mit einigen oder sogar allen steuer- und/oder regelbaren Elementen der Aufschäumvorrichtung verbunden sein, wie bereits oben beschrieben wurde.

Aus dem Kaltmilchgefäß wird die Milch 409 über eine Milchzuleitung 421 mittels einer Milchfördereinrichtung 425, beispielsweise eine Pumpe, in die Zuführeinrichtung 411 und dort in die Aufschäumkammer 422 gefördert. In der Aufschäumkammer 422 wird die Milch mit dem Dampf-/Luftgemisch von der Dampf-/Luftleitung 408 vermischt und aufgeschäumt und dann über zwei offene Enden der Zuführeinrichtung 411 in Form von Milchauslässen 426 ausgegeben.

In der Aufschäumkammer 422 ist ein Temperatursensor 413 vorgesehen, um die Temperatur der aufgeschäumten Milch zu erfassen. Die Steuerung und/oder Regelung der verschiedenen Ventile, der Druckluftquelle und/oder des Dampferzeugers kann basierend auf der von einem Benutzer vorgegebenen Schaumtemperatur und/oder Schaumkonsistenz sowie der mit dem Temperatursensor 413 gemessenen Temperatur erfolgen.

Statt der gezeigten Zuführeinrichtung 411 kann auch eine Zuführeinrichtung, wie sie beispielsweise in den Figuren 1 oder 3 gezeigt ist, verwendet werden.

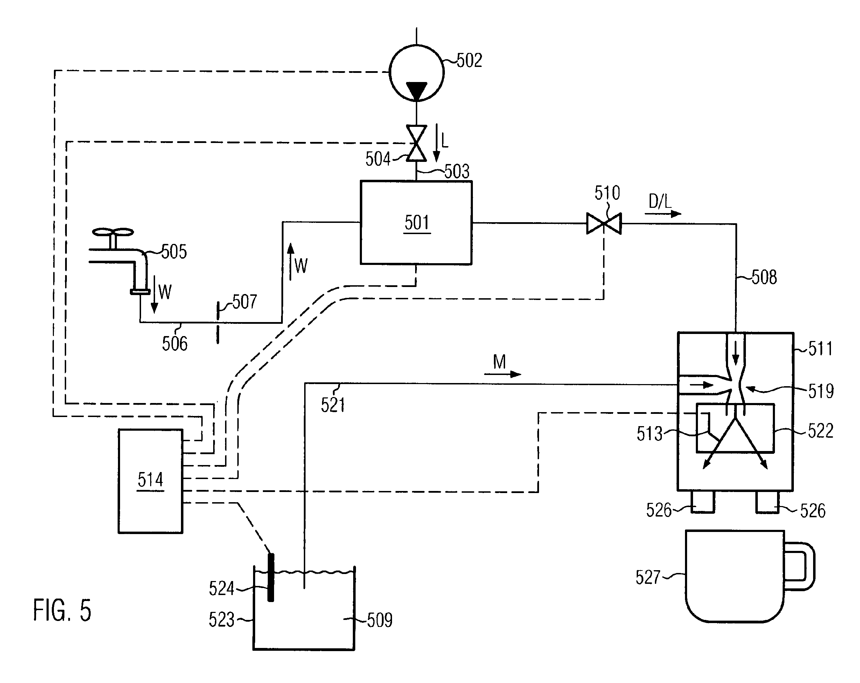

Fig. 5 illustriert schematisch ein weiteres Ausführungsbeispiel einer Aufschäumvorrichtung. Die gleichen Elemente wie in Fig. 4 werden mit analogen Bezugsziffern bezeichnet, deren erste Stelle um eins erhöht ist, also eine 5 ist. So ist beispielsweise der Dampferzeuger mit 501 und die Druckluftquelle mit 502 bezeichnet. Das gezeigte Ausführungsbeispiel unterscheidet sich von der Variante in Fig. 4 darin, dass die Milchförderung nicht mittels einer Pumpe, sondern über eine Venturi-Kammer 519 erfolgt, die in der Zuführeinrichtung 511 vorgesehen ist und einerseits mit der Dampf-/Luftleitung 508 und andererseits der Aufschäumkammer 522 verbunden ist. Durch den Dampf-/Luftstrom wird in der Venturi-Kammer 519 aufgrund des Venturi-Effekts ein Unterdruck erzeugt, was zu einem Ansaugen der Milch 509 aus dem Kaltmilchbehälter 523 über die Milchzuleitung 521 führt. Danach erfolgt wie in Fig. 4 in der Aufschäumkammer 522 ein Aufschäumen und Emulgieren des Dampf-/Luftgemischs mit der Milch, die dann über zwei offene Enden 526 der Zuführeinrichtung 511 in Schaumform in eine Tasse 527 ausgegeben wird.

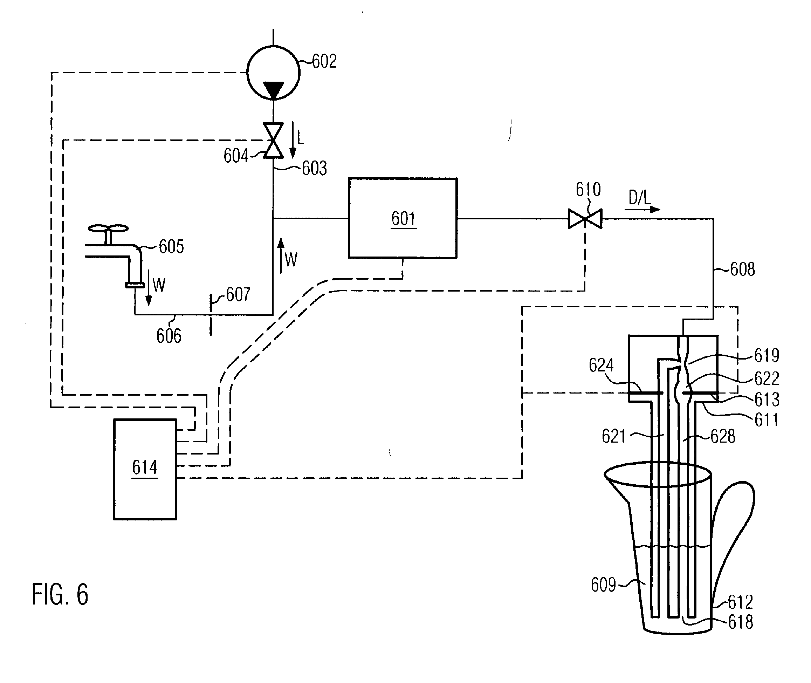

Fig. 6 illustriert schematisch ein weiteres Ausführungsbeispiel, wobei ebenfalls bereits in den vorangegangenen Figuren gezeigte Elemente mit analogen Bezugsziffern versehen sind, die an erster Stelle jedoch eine 6 tragen. Dieses Ausführungsbeispiel unterscheidet sich von den vorangegangenen Ausführungsbeispielen zunächst darin, dass die Druckluft nicht in den Dampferzeuger 601, sondern in die Kaltwasserleitung 606 geführt wird. Die Druckluftquelle 602 wird über eine Luftzuleitung 603 mit der Kaltwasserleitung 606 verbunden und mündet in diese. Damit wird ab dem Mündungspunkt ein Luft-/Wassergemisch zum Dampferzeuger 601 geführt, wo es erhitzt wird und somit ein Dampf-/Luftgemisch erzeugt wird.

Im gezeigten Beispiel wird dem Dampferzeuger 601 Kaltwasser zugeführt. Wie bereits oben beschrieben, kann dem Dampferzeuger jedoch auch ein Heißwasserbereiter vorgeschaltet sein. In diesem Fall kann die Luftzuleitung 603 entweder in die Kaltwasserzuleitung zwischen der Kaltwasserquelle 605 und dem Heißwasserbereiter münden oder in die Heißwasserzuleitung zwischen dem Heißwasserbereiter und dem Dampferzeuger. In beiden Fällen wird der Dampferzeuger mit einem Luft-/Wassergemisch gespeist.

Wie beispielsweise in dem Ausführungsbeispiel der Fig. 1 befindet sich die aufzuschäumende Milch 609 in einem Gefäß 612. Aus diesem Gefäß 612 wird die Milch 609 über eine Milchzuleitung 621 in eine Aufschäumkammer 622 gefördert. Die Fördereinrichtung ist in dem gezeigten Beispiel, wie in dem Beispiel der Fig. 5, eine Venturi-Kammer 619. Die Venturi-Kammer 619 ist damit mit der Dampf-/Luftleitung 608, der Milchzuleitung 621 und der Aufschäumkammer 622 verbunden.

Von der Aufschäumkammer führt ein Schaumkanal 628 mit einem offenen Ende 618 wieder in das gleiche Gefäß 612. Die Venturi-Kammer 619, die Aufschäumkammer 622, die Milchzuleitung 621 sowie der Schaumkanal 628 sind als Teil der Zuführeinrichtung 611 vorgesehen. Weiterhin vorgesehen sind zwei Temperatursensoren 624 und 613, mit denen die Temperatur der aufzuschäumenden Milch bzw. der aufgeschäumten Milch erfasst wird. Beide Temperatursensoren sind mit der Steuerungseinrichtung 614 verbunden, so dass die Steuerung und/oder Regelung der verschiedenen Elemente der Aufschäumvorrichtung basierend auf einer oder beiden Temperaturmesswerten erfolgen kann. Grundsätzlich ist es auch möglich, nur einen der beiden Temperatursensoren vorzusehen. Auch in diesem Ausführungsbeispiel wird die Milch unter Umständen wiederholt aufgeschäumt, da der Milchschaum erneut über die Milchleitung 621 in die Aufschäumkammer gesaugt werden kann.

Es versteht sich, dass die verschiedenen Elemente und Aspekte der gezeigten und beschriebenen Ausführungsformen grundsätzlich beliebig kombiniert werden können. So können beispielsweise die verschiedenen offenbarten Zuführeinrichtungen in jedem der Ausführungsbeispiele eingesetzt werden. Gleiches gilt für die verschiedenen Arten der Luftzuleitung, also die Zuleitung in den Dampferzeuger direkt (in dessen Dampf- oder Heißwasserbereich) oder in eine Kalt- oder Heißwasserzuleitung zum Dampferzeuger. Auch die verschiedenen Arten der Wasserspeisung (beispielsweise über einen Wasserhahn oder ein Wasserreservoir), sei es mit einem zwischengeschalteten Heißwasserbereiter oder nicht können in jedem Ausführungsbeispiel verwendet werden. Auch die Milchförderung kann grundsätzlich in jedem Ausführungsbeispiel auf beliebige Weise, beispielsweise mit einer Pumpe oder mittels des Venturi-Effekts, erfolgen.

## Patentansprüche

1. Vorrichtung zum Erhitzen und Aufschäumen eines Getränkeprodukts, insbesondere Milch, umfassend:
einen Dampferzeuger (101; 201; 401; 501; 601),
eine Druckluftquelle (102; 402; 502; 602),
eine Luftzuleitung (103; 203; 403; 503; 603), die mit der Druckluftquelle verbunden ist,
zum Zuleiten von Luft von der Druckluftquelle zum Dampferzeuger,
eine Dampf-/Luftleitung (108; 208; 408; 508; 608), die mit dem Dampferzeuger verbunden ist, zum Zuleiten eines Dampf-/Luftgemischs vom Dampferzeuger in das Getränkeprodukt,
ein Luftabsperrelement (104; 404; 504; 604) an der Luftleitung und/oder ein Dampfabsperrelement (110; 410; 510; 610) an der Dampf-/Luftleitung.

2. Vorrichtung nach Anspruch 1, wobei der Dampferzeuger zum Verdampfen von Heißwasser ausgebildet ist und einen Heißwasserbereich sowie einen Dampfbereich aufweist und die Luftzuleitung mit dem Dampfbereich und/oder dem Heißwasserbereich verbunden ist, insbesondere in diesen mündet.

3. Vorrichtung nach Anspruch 1, umfassend eine Wasserleitung (106; 206; 406; 506; 606), die mit dem Dampferzeuger verbunden ist, zum Zuleiten von Wasser zum Dampferzeuger und/oder zum Abführen von Wasser vom Dampferzeuger, wobei die Luftzuleitung in die Wasserleitung mündet, insbesondere wobei die Wasserleitung eine Heißwasserzuleitung zum Zuführen von Heißwasser, eine Heißwasserentnahmeleitung zum Abführen von Heißwasser oder eine Kaltwasserzuleitung zum Zuleiten von Kaltwasser ist.

4. Vorrichtung nach einem der vorangegangenen Ansprüche, umfassend eine Aufschäumkammer (322; 422; 522; 622) zum Aufschäumen des Getränkeprodukts, wobei die Dampf-/Luftleitung mit der Aufschäumkammer verbunden ist, insbesondere in diese mündet.

5. Vorrichtung nach Anspruch 4, umfassend eine Getränkeproduktzuleitung (321; 421; 521; 621), die mit der Aufschäumkammer verbunden ist, zum Zuleiten des Getränkeprodukts zur Aufschäumkammer.

6. Vorrichtung nach Anspruch 4 oder 5, umfassend eine Getränkeproduktfördereinrichtung (319; 425; 519; 619) zum Fördern des Getränkeprodukts in die Aufschäumkammer, insbesondere wobei die Getränkeproduktfördereinrichtung eine Venturi-Kammer zum Ansaugen des Getränkeprodukts oder eine Pumpe umfasst.

7. Vorrichtung nach einem der vorangegangenen Ansprüche, weiterhin umfassend eine Zuführeinrichtung (111; 311; 411; 511; 611) mit einem offenen Ende, insbesondere das in ein, insbesondere ein Getränkeprodukt enthaltendes, Gefäß getaucht werden kann, insbesondere wobei die Zuführeinrichtung ausgebildet ist, um dem Gefäß ein Dampf-/Luftgemisch, ein erhitztes Getränkeprodukt und/oder Getränkeproduktschaum zuzuführen.

8. Vorrichtung nach Anspruch 7, wobei die Zuführeinrichtung derart mit der Dampf-/Luftleitung verbunden ist, dass aus dem offenen Ende ein Dampf-/Luftgemisch, ein erhitztes Getränkeprodukt und/oder Getränkeproduktschaum ausgegeben werden.

9. Vorrichtung nach einem der Ansprüche 7 oder 8, wobei die Zuführeinrichtung eine Einlassöffnung zur Aufnahme eines Getränkeprodukts, insbesondere aus dem Gefäß, aufweist.

10. Vorrichtung nach einem der Ansprüche 7 - 9, wobei die Zuführeinrichtung eine Aufschäumkammer und/oder eine Getränkeproduktfördereinrichtung zum Fördern eines Getränkeprodukts umfasst.

11. Vorrichtung nach einem der vorangegangenen Ansprüche, umfassend eine Temperaturerfassungseinrichtung zum Erfassen der Temperatur des erhitzten Getränkeprodukts und/oder des Getränkeproduktschaums.

12. Vorrichtung nach Anspruch 11, wobei die Temperaturerfassungseinrichtung einen Temperatursensor umfasst, der mit der Getränkeproduktzuleitung, dem offenen Ende der Zuführeinrichtung, der Einlassöffnung der Zuführeinrichtung, der Getränkeproduktfördereinrichtung und/oder der Aufschäumkammer verbunden und/oder daran angeordnet ist, insbesondere wobei der Temperatursensor zum Erfassen der Temperatur in der Getränkeproduktzuleitung, der Aufschäumkammer, der Getränkeproduktfördereinrichtung und/oder dem Gefäß ausgebildet ist.

13. Vorrichtung nach einem der vorangegangenen Ansprüche, umfassend eine Steuerungseinrichtung zum automatisierten Steuern und/oder Regeln des Dampferzeugers, der Druckluftquelle, des Luftabsperrelements, des Dampfabsperrelements und/oder der Getränkeproduktfördereinrichtung, insbesondere wobei die Steuerungseinrichtung mit der Temperaturerfassungseinrichtung verbunden ist und zum Steuern und/oder Regeln in Abhängigkeit der erfassten Temperatur ausgebildet ist.

14. Vorrichtung nach Anspruch 13, wobei eine gewünschte Getränkeprodukttemperatur, Schaumtemperatur und/oder Schaumkonsistenz vorgebbar ist und das Steuern und/oder Regeln in Abhängigkeit der vorgegebenen Getränkeprodukttemperatur, Schaumtemperatur und/oder Schaumkonsistenz erfolgt.

15. Vorrichtung nach einem der vorangegangenen Ansprüche, umfassend einen Kaltgetränkeproduktbehälter und eine Kühleinrichtung für den Kaltgetränkeproduktbehälter.

16. Vorrichtung nach einem der vorangegangenen Ansprüche, umfassend einen Drucksensor zum Erfassen des Drucks im Dampferzeuger und/oder einen Temperatursensor zum Erfassen der Temperatur im Dampferzeuger, wobei die Steuerung der Druckluftquelle und/der des Luftabsperrelements in Abhängigkeit des erfassten Drucks und/oder der erfassten Temperatur erfolgt.

17. Kaffeemaschine umfassend eine Vorrichtung nach einem der vorangegangenen Ansprüche.

## Claims

1. Apparatus for heating and frothing a beverage product, in particular milk, comprising:
a steam generator (101; 201; 401; 501; 601),
a compressed air source (102; 402; 502; 602),
an air supply conduit (103; 203; 403; 503; 603) connected to the compressed air source to supply air from the compressed air source to the steam generator,
a steam/air conduit (108; 208; 408; 508; 608) connected to the steam generator to supply a steam/air mixture from the steam generator into the beverage product,
an air shut-off member (104; 404; 504; 604) on the air conduit and/or a steam shutoff member (110; 410; 510; 610) on the steam/air conduit.

2. Apparatus according to claim 1, wherein the steam generator is adapted for the evaporation of hot water and comprises a hot water area and a steam area, and the air supply conduit is connected to the steam area and/or the hot water area, specifically opens into the latter.

3. Apparatus according to claim 1, comprising a water conduit (106; 206; 406; 506; 606) which is connected to the steam generator to supply water to the steam generator and/or to discharge water from the steam generator, with the air supply conduit opening into the water conduit, in particular, wherein the water conduit is a hot water supply conduit for supplying hot water, a hot water withdrawal conduit for discharging hot water, or a cold water supply conduit for supplying cold water.

4. Apparatus according to one of the preceding claims, comprising a frothing chamber (322; 422; 522; 622) for frothing the beverage product, wherein the steam/air conduit is connected to the frothing chamber, specifically opens into the latter.

5. Apparatus according to claim 4, comprising a beverage product supply conduit (321, 421; 521; 621) which is connected to the frothing chamber to supply the beverage product to the frothing chamber.

6. Apparatus according to claim 4 or 5, comprising a beverage product conveyor (319; 425; 519; 619) to convey the beverage product into the frothing chamber, in particular, wherein the beverage product conveyor comprises a Venturi chamber for sucking in the beverage product, or a pump.

7. Apparatus according to one of the preceding claims, further comprising a supply device (111; 311; 411; 511; 611) which has one open end, which can in particular be immersed in a vessel containing in particular a beverage product, in particular, wherein the supply device is adapted to supply a steam/air mixture, a heated beverage product and/or beverage product foam to the vessel.

8. Apparatus according to claim 7, wherein the supply device is connected to the steam/air conduit to allow dispensing a steam/air mixture, a heated beverage product and/or beverage product foam from the open end.

9. Apparatus according to claim 7 or 8, wherein the supply device comprises an inlet opening for receiving a beverage product, in particular from the vessel.

10. Apparatus according to one of claims 7 to 9, wherein the supply device comprises a frothing chamber and/or a beverage product conveyor for conveying a beverage product.

11. Apparatus according to one of the preceding claims, comprising a temperature detection device for detecting the temperature of the heated beverage product and/or the beverage product foam.

12. Apparatus according to claim 11, wherein the temperature detection device comprises a temperature sensor which is connected to and/or arranged on the beverage product supply conduit, the open end of the supply device, the inlet opening of the supply device, the beverage product conveyor and/or the frothing chamber, in particular, wherein the temperature sensor is adapted to detect the temperature in the beverage product supply conduit, the frothing chamber, the beverage product conveyor and/or the vessel.

13. Apparatus according to one of the preceding claims, comprising a control device for the automated control and/or regulation of the steam generator, the compressed air source, the air shutoff member, the steam shut-off member and/or the beverage product conveyor, in particular wherein the control device is connected to the temperature detection device and is adapted to control and/or regulate in response to the detected temperature.

14. Apparatus according to claim 13, wherein a desired beverage product temperature, foam temperature and/or foam consistency is predefinable and the controlling and/or regulating is accomplished in response to the predefined beverage product temperature, foam temperature and/or foam consistency.

15. Apparatus according to one of the preceding claims, comprising a cold beverage product container and a cooling device for the cold beverage product container.

16. Apparatus according to one of the preceding claims, comprising a pressure sensor for detecting the pressure in the steam generator and/or a temperature sensor for detecting the temperature in the steam generator, with the compressed air source and/or the air shut-off member being controlled in response to the detected pressure and/or the detected temperature.

17. Coffee machine, comprising an apparatus according to one of the preceding claims.

## Revendications

1. Dispositif pour chauffer et faire mousser un produit de boisson, notamment du lait, comprenant :
un générateur de vapeur (101; 201; 401; 501; 601),
une source d'air comprimé (102; 402; 502; 602),
une conduite d'amenée d'air (103; 203; 403; 503; 603), qui est reliée à la source d'air comprimé, en vue d'amener de l'air au générateur de vapeur à partir de la source d'air comprimé,
une conduite de vapeur/d'air (108; 208; 408; 508; 608), qui est reliée au générateur de vapeur, en vue d'amener un mélange vapeur/air dans le produit de boisson à partir du générateur de vapeur,
un élément d'arrêt d'air (104; 404; 504; 604) dans la conduite d'air et/ou un élément d'arrêt de vapeur (110; 410; 510; 610) dans la conduite de vapeur/d'air.

2. Dispositif selon la revendication 1, dans lequel le générateur de vapeur est conçu pour assurer l'évaporation d'eau chaude et présente une zone d'eau chaude et une zone de vapeur, et la conduite d'amenée d'air est reliée à la zone de vapeur et/ou la zone d'eau chaude, notamment débouche dans celle-ci.

3. Dispositif selon la revendication 1, comprenant une conduite d'eau (106; 206; 406; 506; 606) qui est reliée au générateur de vapeur, pour amener de l'eau au générateur de vapeur et/ou pour évacuer de l'eau du générateur de vapeur, la conduite d'amenée d'air débouchant dans la conduite d'eau, la conduite d'eau étant notamment une conduite d'amenée d'eau chaude pour amener de l'eau chaude, une conduite de prélèvement d'eau chaude pour évacuer de l'eau chaude, ou une conduite d'amenée d'eau froide pour l'amenée d'eau froide.

4. Dispositif selon l'une des revendications précédentes, comprenant une chambre de moussage (322; 422; 522; 622) pour faire mousser le produit de boisson, la conduite de vapeur/d'air étant reliée à la chambre de moussage, en débouchant notamment dans celle-ci.

5. Dispositif selon la revendication 4, comprenant une conduite d'amenée de produit de boisson (321; 421; 521; 621), qui est reliée à la chambre de moussage, pour amener le produit de boisson dans la chambre de moussage.

6. Dispositif selon la revendication 4 ou la revendication 5, comprenant un moyen de transport du produit de boisson (319; 425; 519 ; 619) pour assurer le transport du produit de boisson dans la chambre de moussage, le moyen de transport du produit de boisson comprenant notamment une chambre à Venturi pour aspirer le produit de boisson, ou une pompe.

7. Dispositif selon l'une des revendications précédentes, comprenant, par ailleurs, un moyen d'alimentation (111; 311; 411; 511; 611) avec une extrémité ouverte, qui peut notamment être plongée dans un récipient renfermant notamment un produit de boisson, le moyen d'alimentation étant notamment conçu pour amener au récipient un mélange vapeur/air, un produit de boisson ayant été chauffé et/ou une mousse de produit de boisson.

8. Dispositif selon la revendication 7, dans lequel le moyen d'alimentation est relié à la conduite de vapeur/d'air de manière telle qu'il soit possible de délivrer, de l'extrémité ouverte, un mélange vapeur/air, un produit de boisson ayant été chauffé et/ou une mousse de produit de boisson.

9. Dispositif selon l'une des revendications 7 ou 8, dans lequel le moyen d'alimentation présente une ouverture d'entrée pour y recevoir un produit de boisson, notamment en provenance du récipient.

10. Dispositif selon l'une des revendications 7-9, dans lequel le moyen d'alimentation comprend une chambre de moussage et/ou un moyen de transport de produit de boisson pour transporter un produit de boisson.

11. Dispositif selon l'une des revendications précédentes, comprenant un moyen de relevé de température pour relever la température du produit de boisson ayant été chauffé et/ou de la mousse de produit de boisson.

12. Dispositif selon la revendication 11, dans lequel le moyen de relevé de température comprend un capteur de température relié à et/ou agencé sur la conduite d'amenée de produit de boisson, l'extrémité ouverte du moyen d'alimentation, l'ouverture d'entrée du moyen d'alimentation, le moyen de transport du produit de boisson et/ou la chambre de moussage, le capteur de température étant notamment conçu pour relever la température dans la conduite d'amenée de produit de boisson, la chambre de moussage, le moyen de transport du produit de boisson et/ou le récipient.

13. Dispositif selon l'une des revendications précédentes, comprenant une unité de commande pour la commande et/ou la régulation automatique du générateur de vapeur, de la source d'air comprimé, de l'élément d'arrêt d'air, de l'élément d'arrêt de vapeur et/ou du moyen de transport de produit de boisson, l'unité de commande étant notamment reliée au moyen de relevé de température, et conçue pour commander et/ou réguler en fonction de la température relevée.

14. Dispositif selon la revendication 13, dans lequel il est possible de prescrire une température souhaitée du produit de boisson, une température souhaitée de moussage et/ou une consistance de mousse souhaitée, et dans lequel la commande et/ou la régulation s'effectuent en fonction de la température du produit de boisson, la température de moussage et/ou la consistance de mousse prescrites.

15. Dispositif selon l'une des revendications précédentes, comprenant un réservoir de produit de boisson froid et un dispositif de refroidissement pour le réservoir de produit de boisson froid.

16. Dispositif selon l'une des revendications précédentes, comprenant un capteur de pression pour relever la pression dans le générateur de vapeur, et/ou un capteur de température pour relever la température dans le générateur de vapeur, la commande de la source d'air comprimé et/ou de l'élément d'arrêt d'air s'effectuant en fonction de la pression relevée et/ou de la température relevée.

17. Machine à café comprenant un dispositif selon l'une des revendications précédentes.
